Europäisches Patentamt

European Patent Office

Office européen des brevets

(11) Publication number: **0 266 678**
**A2**

# (12) EUROPEAN PATENT APPLICATION

(21) Application number: 87115901.8

(22) Date of filing: 29.10.87

(51) Int. Cl.⁴: **H04M 1/22**

(30) Priority: 30.10.86 JP 258746/86

(43) Date of publication of application:
**11.05.88 Bulletin 88/19**

(84) Designated Contracting States:
**DE GB IT NL SE**

(71) Applicant: **NEC CORPORATION**
**33-1, Shiba 5-chome, Minato-ku**
**Tokyo 108(JP)**

Applicant: **NIPPON TELEGRAPH AND**
**TELEPHONE CORPORATION**
**1-6 Uchisaiwaicho 1-chome Chiyoda-ku**
**Tokyo(JP)**

Applicant: **KABUSHIKI KAISHA TOSHIBA**
**72, Horikawa-cho Saiwai-ku**
**Kawasaki-shi Kanagawa-ken 210(JP)**

(72) Inventor: **Shimura, Yukihiro c/o NEC**
**Corporation**
**33-1, Shiba 5-chome**
**Minato-ku Tokyo(JP)**
Inventor: **Saegusa, Noboru c/o NEC**
**Corporation**
**33-1, Shiba 5-chome**
**Minato-ku Tokyo(JP)**
Inventor: **Furuno, Tatsuo**
**15-1, Moriska, 3-chome**
**Yokosuka-shi, Kanagawa(JP)**
Inventor: **Tate, Kazuyuki**
**9-60, Ohsu, Naka-ku, 4-chome**
**Nagoya-shi, Aichi(JP)**
Inventor: **Huse, Syoji**
**2750-1055, Motohachioji, 3-chome**
**Hachioji-shi, Tokyo(JP)**
Inventor: **Ono, Koji**
**Hachioji-Hazama-Jutaku 605,**
**1222-1,Kunugita-cho**
**Hachioji-shi, Tokyo(JP)**

(74) Representative: **Vossius & Partner**
**Siebertstrasse 4 P.O. Box 86 07 67**
**D-8000 München 86(DE)**

(54) Radio telephone apparatus.

(57) A radio telephone apparatus is assigned with an identification code beforehand and includes a parent unit (1) and a radio telephone set both storing this identification code. When the radio telephone set is put on the parent unit (1), a charging path through which a battery of the radio telephone set is charged

by a charger (13) of the parent unit (1) and a data channel through which data is transmitted/received between control circuits of the parent unit (1) and the radio telephone set are formed. The control circuit (14) of the parent unit (1) transmits an identification code request signal to the radio telephone set in response to a charging start signal from the charger (13). The control circuit of the radio telephone set sends back the identification code stored therein. The parent unit (1) compares the received identification code with the identification code stored therein. If the two identification codes are not coincident with each other, the parent unit (1) controls an alarm unit (16) to generate an alarm.

FIG.1

## Radio Telephone Apparatus

### Background of the Invention

The present invention relates to a radio telephone apparatus. A radio telephone apparatus or a cordless telephone apparatus comprises a parent unit, i.e., a so-called connector which is connected to a telephone subscriber line and one or more radio telephone sets connected to the parent unit by a radio channel. A user of the radio telephone set can freely move the radio telephone set and talk through the subscriber line while a moving distance of a conventional telephone set with a cord is limited to a length of the cord. In addition, in a stand-by state wherein no talking is made, the radio telephone set can be put on the parent unit to charge a battery incorporated therein. In recent years, such a convenient radio telephone set has been widely used.

Assume that a radio telephone apparatus A including a parent unit PA and a radio telephone set TA, and a radio telephone apparatus B including a parent unit PB and a radio telephone set TB are disposed adjacent to each other in a relatively small area such as an office. In this case, the following problem may be posed.

That is, in the stand-by condition wherein no talking is made, the radio telephone set TA of the radio telephone apparatus A is put on the parent unit PA, and the radio telephone set TB of the radio telephone apparatus B is put on the parent unit PB. However, when talking is completed, the radio telephone set TB may be erroneously returned to the parent unit PA, and the radio telephone set TA may be erroneously returned to the parent unit PB. In this case, since batteries of the radio telephone sets TA and TB are charged by the parent units PB and PA, respectively, no problem is posed. However, if an incoming call is input to the parent unit PA and a ringing tone is generated from the radio telephone set TA, it undesirably seems that the incoming call is input to the parent unit PB since the radio telephone set TA is put on the parent unit PB.

### Summary of the Invention

It is, therefore, an object of the present invention to eliminate the above problem of a conventional technique and to provide a radio telephone apparatus having a function of preventing erroneous combination of a parent unit and a radio telephone set when a plurality of radio telephone apparatuses are disposed adjacent to each other.

In order to achieve the above object of the present invention, there is provided a radio telephone apparatus comprising: a parent unit connected to a subscriber line; and a radio telephone set, connected to the parent unit through a radio channel and hence connected to the subscriber line, and detachably put on the parent unit, the parent unit and the radio telephone set being assigned with the same identification number, wherein the parent unit comprises: first connecting means for forming, when the radio telephone set is put on the parent unit, a charging path through which a battery of the radio telephone set is charged; a charger for charging the battery through the first connecting means and generating a charging start signal when charging is started; first memory means for storing an identification number; alarming means for generating an alarm; and control means for transmitting an identification code request signal to the radio telephone set in response to the charging start signal, and when the identification code is not transmitted from the radio telephone set or the received identification code is not coincident with the identification code stored in the first memory means, controlling the alarming means to generate an alarm, and the radio telephone set comprises: second connecting means, electrically connected to the first connecting means, for forming the charging path; a battery serving as a power source of the radio telephone set and charged by the charger through the second connecting means; second memory means for storing the same identification code as that of the parent unit; and control means for transmitting the identification code stored in the second memory means to the parent unit in response to the identification code request signal.

### Brief Description of the Invention

Fig. 1 is a block diagram of a parent unit according to an embodiment of a radio telephone apparatus of the present invention;

Fig. 2 is a block diagram of a radio telephone set according to the embodiment of the radio telephone apparatus of the present invention;

Figs. 3A and 3B are flow charts for explaining operations of the parent unit and the radio telephone set shown in Figs. 1 and 2, respectively; and

Fig. 4 is a circuit diagram of a charger shown in Fig. 1.

## Detailed Description of the Preferred Embodiment

An embodiment of the present invention will be described below with reference to the accompanying drawings.

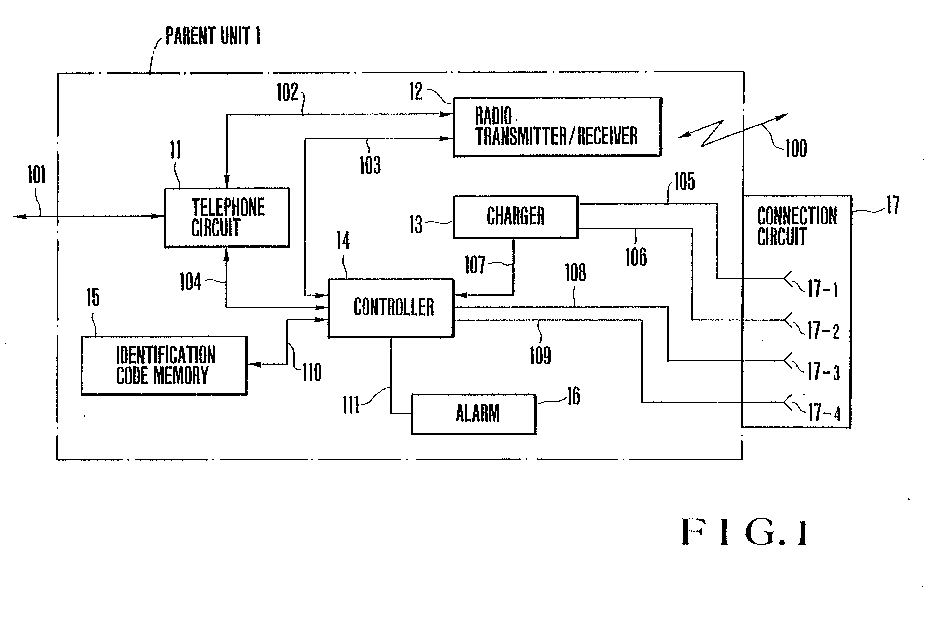

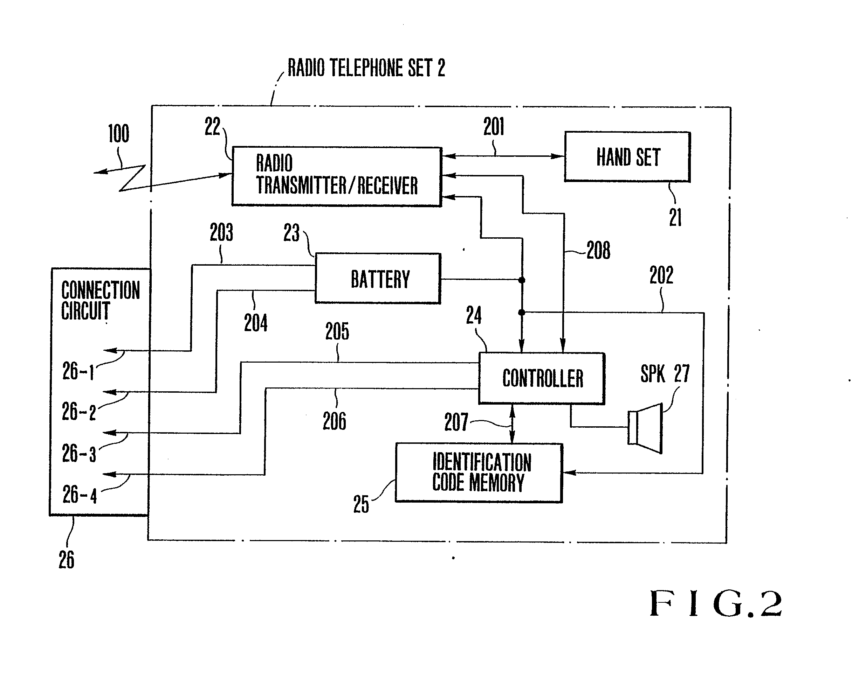

Figs. 1 and 2 show a parent unit 1 and a radio telephone set 2, respectively, according to an embodiment of a radio telephone apparatus of the present invention. A given identification code is assigned to the radio telephone apparatus.

As shown in Fig. 1, the parent unit 1 comprises a telephone circuit 11 connected to a subscriber telephone line 101, a radio transmitter/receiver 12 for transmitting/receiving various signals to/from the radio telephone set 2 through a radio channel 100, a connection circuit 17 for enabling charging of the radio telephone set 2 and transmitting/receiving a data signal with respect thereto when the radio telephone set 2 is put on the parent unit 1, a charger 13 for charging the radio telephone set 2 through the connection circuit 17 and generating a charging start signal when charging is started, an identification code memory 15 for storing the identification code, an alarm 16 for generating an alarm, and a controller 14 for controlling the telephone circuit 11 and the radio transmitter/receiver 12, receiving the charging start signal from the charger 13 and transmitting an identification code request signal to the radio telephone set 2 through the connection circuit 17, and when the identification code is not transmitted from the radio telephone set 2 or the received identification code is not coincident with an identification code stored in the identification code memory 15, controlling the alarm 16 to generate the alarm.

As shown in Fig. 2, the radio telephone set 2 comprises a radio transmitter/receiver 22 connected to the parent unit 1 through the radio channel, a connection circuit 26 electrically connected to the connection circuit 17 when the radio telephone set 2 is put on the parent unit 1, a battery 23 serving as a power source of the radio telephone set 2 and charged by the charger 13 of the parent unit 1 through the connection circuit 26, an identification code memory 25 for storing the same identification code as that of the parent unit 1, a controller 24 for controlling a radio channel of the radio transmitter/receiver 22, and in response to the identification code request signal transmitted through the connection circuit 26, transmitting an identification code to be stored in the identification code memory 25 to the parent unit 1 through the connection circuit 26, a handset 21, and a loudspeaker 27 for informing reception of an incoming call.

Operations of the radio telephone apparatus comprising the parent unit 1 and the radio telephone set 2 respectively shown in Figs. 1 and 2 will be described below.

When the telephone set 2 is picked up from the parent unit 1 to start talking, a voice signal from the subscriber telephone line 101 is transmitted to the handset 21 through the telephone circuit 11, a voice signal line 102, the radio transmitter/receiver 12, the radio channel 100, the radio transmitter/receiver 22, and a voice signal line 201. A voice signal from the radio telephone set 2 is transmitted to the subscriber telephone line 101 through a path in a direction opposite to that of the above path.

In the parent unit 1, a connection operation of the telephone circuit 11 and setting of the radio channel of the radio transmitter/receiver 12 are controlled by the controller 14 respectively through a telephone circuit control line 104 and a radio transmitter/receiver control line 103. In the radio telephone set 2, setting of the radio channel of the radio transmitter/receiver 22 is controlled by the controller 24 through a radio transmitter/receiver control line 208.

In this case, since the connection circuits 17 and 26 respectively of the parent unit 1 and the radio telephone set 2 are not connected with each other, a charging path (to be described later) is not formed, so that the battery 23 of the radio telephone set 2 is not charged.

Operations performed when talking is completed and the radio telephone set 2 is put on the parent unit 1 will be described below.

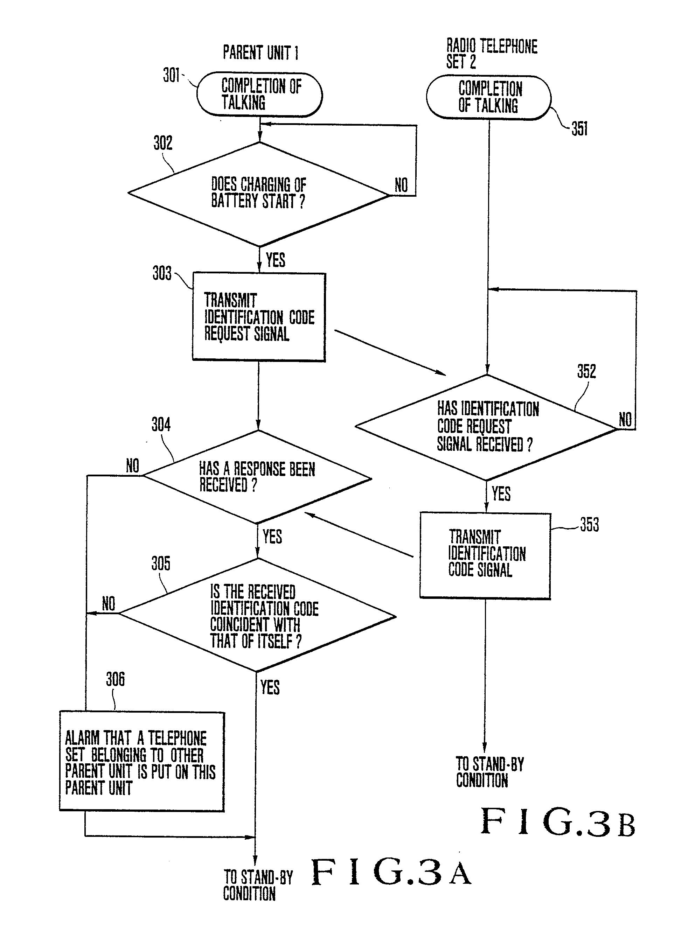

Figs. 3A and 3B are flow charts for explaining operations of the parent unit 1 and the radio telephone set 2 performed when talking is completed, respectively.

When the radio telephone set 2 is put on the parent unit 1, corresponding connection terminals 26-1 and 17-1, 26-2 and 17-2, 26-3 and 17-3, and 26-4 and 17-4 respectively of the connection circuits 26 and 17 are connected with each other, respectively.

Therefore, a charging path with respect to the battery 23 of the radio telephone set 2 is formed in the order of charging line 203 - connection terminal 26-1 - connection terminal 17-1 - charging line 105 - charger 13 - charging line 106 - connection terminal 17-2 - connection terminal 26-2 - charging line 204, and charging of the battery 23 is started by the charger 13. At the same time, data lines 108 and 109 of the parent unit 1 are connected to data lines 205 and 206 of the radio telephone set 2, respectively. Therefore, the controller 14 of the parent unit 1 can transmit/receive a data signal with respect to the controller 24 of the radio telephone set 2 not through the radio transmitter/receivers 12 and 22.

As shown in Fig. 3A, in the parent unit 1, when the charger 13 detects that charging is started (step 302), it transmits a charging start signal 107 to the controller 14. Then, the controller 14 of the parent unit 1 transmits the identification code request signal to the controller 24 of the radio telephone set 2 through the data lines 108 and 205 (step 303). In step 304, the controller 14 checks whether a response has been received. If NO in step 304, the controller 14 controls the alarm 16 to generate a predetermined alarm (step 306) and goes to a stand-by condition.

On the other hand, as shown in Fig. 3B, in the radio telephone set 2, the controller 24 waits for the identification code request signal from the parent unit 1 (step 352) after talking is completed (step 351). If the identification code request signal has been received, the controller 24 reads out the identification code stored in the identification code memory 25 and transmits it to the controller 14 of the parent unit 1 through the data lines 206 and 109 (step 353). Then, the controller 24 goes to the stand-by condition.

In this case, since the controller 14 of the parent unit 1 detects in step 304 of Fig. 3A, that a response has been received, the flow advances to step 305. In step 305, the controller 14 reads out the identification code of itself from the identification code memory 15 through an identification signal line 110 and checks whether the identification code transmitted from the radio telephone set 2 is coincident with that of itself. If YES in step 305, the controller 14 directly goes to the stand-by condition. If NO in step 305, the controller 14 controls the alarm 16 to generate the alarm (step 306) and then goes to the stand-by condition.

If the radio telephone set 2 is erroneously returned to a parent unit of a radio telephone apparatus having a different identification code, e.g., a parent unit 1' (not shown), this parent unit 1' generates an alarm. Therefore, a user notices his or her erroneous operation and can properly cope with the situation.

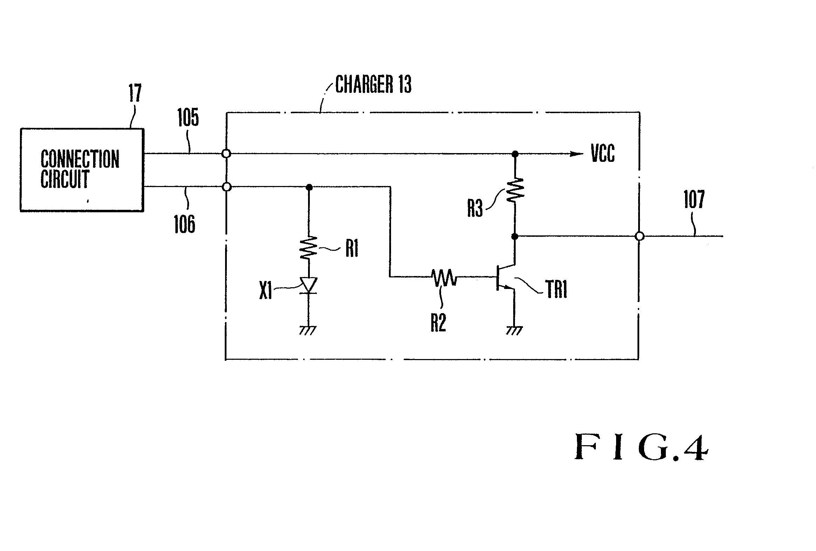

Fig. 4 is a circuit diagram of the charger 13. When the radio telephone set 2 is not put on the parent unit 1, a transistor TR1 is kept off since no base current flows therethrough, and a line 107 has the same potential as that of a power source voltage VCC.

When the radio telephone set 2 is put on the parent unit 1, a charging current flows through a charging path of power source VCC - charging line 105 - connection circuit 17 - connection circuit 26 - charging line 203 - battery 23 - connection circuit 26 - connection circuit 17 - charging line 106 - resistor R1 - diode X1.

At this time, a current flowing through the charging line 106 partially flows through a resistor R2 and the base of the transistor TR1, thereby turning on the transistor TR1. Therefore, the potential of the line 107 goes to a ground level, and the controller 14 of the parent unit 1 can detect that charging is started.

Examples of a method of generating an alarm by the alarm 16 of the parent unit 1 are as follows. That is, (1) a sound generating means such as a loudspeaker is used to generate an alarm sound, (2) an indicator lamp is turned on or flickered, (3) a display such as a liquid crystal is used to display predetermined information, and (4) the above methods (1), (2), and (3) are used in combination. In the method (3), identification codes respectively of the parent unit 1' and the radio telephone set 2 may be displayed to inform noncoincidence therebetween, or information required to obtain coincidence may be displayed. Furthermore, in the latter method, a telephone number of the parent unit 1 to which the radio telephone set 2 must be returned may be displayed, or numbers may be assigned to desks on which the parent units 1, 1', and the like are placed and the number of a desk on which the parent unit 1 is placed may be displayed.

The above methods can be arbitrarily adopted as needed.

That is, the alarm 16 includes at least one of the sound generating means such as a loudspeaker and the display means such as a display or an indicator lamp.

As has been described above, according to the radio telephone apparatus of the present invention, when the radio telephone set is put on the parent unit and charging is started after talking is completed, identification codes respectively of the parent unit and the radio telephone set are checked in response to detection of start of charging. If the respective identification codes are not coincident with each other or an identification code is not transmitted from the radio telephone set, an alarm is generated. Therefore, a user can easily determine that the radio telephone set is erroneously combined with the parent unit.

As a result, a conventional problem, i.e., a radio telephone set put on a parent unit which detects an incoming call does not generate a ringing tone and a radio telephone set put on a parent unit which does not receive an incoming call generates a ringing tone, can be effectively prevented.

## Claims

1. A radio telephone apparatus comprising:

a parent unit connected to a subscriber line;

and a radio telephone set, connected to said parent unit through a radio channel and hence connected to said subscriber line, and detachably put on said parent unit, said parent unit and said radio telephone set being assigned with the same identification number, wherein

said parent unit comprises: first connecting means for forming, when said radio telephone set is put on said parent unit, a charging path through which a battery of said radio telephone set is charged; a charger for charging said battery through said first connecting means and generating a charging start signal when charging is started; first memory means for storing an identification number; alarming means for generating an alarm; and control means for transmitting an identification code request signal to said radio telephone set in response to the charging start signal, and when the identification code is not transmitted from said radio telephone set or the received identification code is not coincident with the identification code stored in said first memory means, controlling said alarming means to generate an alarm, and

said radio telephone set comprises: second connecting means, electrically connected to said first connecting means, for forming said charging path; a battery serving as a power source of said radio telephone set and charged by said charger through said second connecting means; second memory means for storing the same identification code as that of said parent unit; and control means for transmitting the identification code stored in said second memory means to said parent unit in response to the identification code request signal.

2. An apparatus according to claim 1, wherein, when said radio telephone set is put on said parent unit, said first and second connecting means form a data channel through which a data signal can be transmitted/received with respect to said radio telephone set and wherein each of said first and second connecting means has a pair of connection terminals for said charging path and a pair of connection terminals for said data channel.

3. An apparatus according to claim 2, wherein said charger has a power source connected to one of said pair of connection terminals for said charging path of said first connecting means, a series circuit connected between the other one of said pair of connection terminals and ground and consisting of a first resistor and a diode, and a transistor, connected between said power source and ground through a second resistor which is connected in series with said transistor, the base of which is connected to said other one of said pair of connection terminals, and the charging start signal is output from one end of said second resistor.

4. An apparatus according to any of claims 1 to 3, wherein said alarming means has at least one of display means capable of displaying information concerning noncoincidence of the identification codes or information required to obtain coincidence and sound generating means for generating a predetermined alarm sound.

PARENT UNIT 1

RADIO TRANSMITTER/RECEIVER  12

100

TELEPHONE CIRCUIT  11

CHARGER  13

CONTROLLER  14

IDENTIFICATION CODE MEMORY  15

ALARM  16

CONNECTION CIRCUIT  17

17-1

17-2

17-3

17-4

101, 102, 103, 104, 105, 106, 107, 108, 109, 110, 111

0 266 678

F I G. 1

RADIO TELEPHONE SET 2

100

22

201

RADIO TRANSMITTER/RECEIVER

HAND SET

21

203

23

208

202

BATTERY

CONNECTION CIRCUIT

204

24

205

26-1

CONTROLLER

SPK 27

26-2

206

207

26-3

IDENTIFICATION CODE MEMORY

26-4

25

26

F I G.2

0 266 678

PARENT UNIT 1

301 — ( COMPLETION OF TALKING )

302

< DOES CHARGING OF BATTERY START ? > —— NO

↓ YES

303

TRANSMIT IDENTIFICATION CODE REQUEST SIGNAL

304

NO —— < HAS A RESPONSE BEEN RECEIVED ? >

↓ YES

305

NO —— < IS THE RECEIVED IDENTIFICATION CODE COINCIDENT WITH THAT OF ITSELF ? >

↓ YES

306

ALARM THAT A TELEPHONE SET BELONGING TO OTHER PARENT UNIT IS PUT ON THIS PARENT UNIT

TO STAND-BY CONDITION

**FIG.3A**

RADIO TELEPHONE SET 2

( COMPLETION OF TALKING ) — 351

352

< HAS IDENTIFICATION CODE REQUEST SIGNAL RECEIVED ? > —— NO

↓ YES

TRANSMIT IDENTIFICATION CODE SIGNAL — 353

TO STAND-BY CONDITION

**FIG.3B**

CONNECTION CIRCUIT

CHARGER 13

17

105

106

VCC

R3

R1

X1

R2

TR1

107

F I G.4

0 266 678